Europäisches Patentamt

European Patent Office

Office européen des brevets

(19)

(11) EP 0 450 589 B1

(12) EUROPÄISCHE PATENTSCHRIFT

(45) Veröffentlichungstag und Bekanntmachung des Hinweises auf die Patenterteilung:
20.03.1996 Patentblatt 1996/12

(51) Int Cl.[6]: C08G 69/32

(21) Anmeldenummer: 91105237.1

(22) Anmeldetag: 03.04.1991

(54) **Verfahren zur Herstellung von aromatischen Polyamiden mit hoher Hydrolysebeständigkeit**

Process for preparing aromatic polyamides with high hydrolytic stability

Procédé pour la production de polyamides aromatiques ayant une haute stabilité à l'hydrolyse

(84) Benannte Vertragsstaaten:
CH DE ES FR GB IT LI NL

(30) Priorität: 05.04.1990 DE 4010941

(43) Veröffentlichungstag der Anmeldung:
09.10.1991 Patentblatt 1991/41

(73) Patentinhaber: HOECHST AKTIENGESELLSCHAFT
D-65926 Frankfurt am Main (DE)

(72) Erfinder:
• Miess, Georg-Emrich, Dr.
  W-6240 Königstein/Taunus (DE)
• Klein, Peter, Dr.
  W-6200 Wiesbaden (DE)
• Pressler, Wilfried, Dr.
  W-6233 Kelkheim/Taunus (DE)

(56) Entgegenhaltungen:
EP-A- 0 098 412          DE-A- 1 595 681
DE-A- 2 219 703          DE-A- 2 818 669
US-A- 3 819 587

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung von aromatischen Polyamiden (im folgenden Aramide genannt) mit hoher Hydrolysebeständigkeit unter Einsatz wasserhaltiger Diamine und wasserhaltiger organischer Lösungsmittel.

Aramide sind hochmolekulare aromatische Polyamide, die teils aus organischen Lösungsmitteln, teils aus schwefelsaurer Lösung zu Filamenten mit außerordentlich hohen mechanischen Festigkeiten und sehr guter Temperaturstabilität versponnen werden können. Diese Filamente haben sich daher insbesondere für den technischen Einsatz in vielfältiger Weise hervorragend bewährt. Die Herstellung der Aramide und Verfahren zum Verspinnen dieser Polymeren sind aus zahlreichen Publikationen bekannt.

Zur Herstellung der Aramide werden aromatische Diamine oder Gemische von aromatischen Diaminen, vorzugsweise solchen, bei denen die Aminogruppen in para-Stellung oder in vergleichbarer koaxialer Stellung an den aromatischen Kern gebunden sind, mit aromatischen Dicarbonsäuredichloriden, vorzugsweise solchen, bei denen ebenfalls die Carbonsäurechloridgruppen in para-Stellung an den aromatischen Rest gebunden sind, in einem geeigneten organischen Lösungsmittel miteinander umgesetzt. Dabei hat es sich als zweckmäßig erwiesen, anstelle einzelner aromatischer Diamine Gemische verschiedener aromatischer Diamine einzusetzen, da auf diese Weise Aramide erhalten werden, die ein günstigeres Lösungsverhalten haben und dadurch technisch einfacher zu Filamenten versponnen werden können. Weitere Wege, zu Aramiden mit einer verbesserten Löslichkeit in organischen Lösungsmitteln zu gelangen bestehen in der ausschließlichen oder teilweisen Verwendung von Diaminen, bei denen die Aminogruppen in meta-Stellung an den aromatischen Kern gebunden sind und/oder von Diaminen, die in der Polymerkette Winkel erzeugen, wie z. B. Diamine mit Ethergruppen und/oder von Diaminen, deren aromatische Kerne Substituenten tragen. Auch die ausschließliche oder anteilige Verwendung von aromatischen meta-Dicarbonsäure-dihalogeniden zur Herstellung der Aramide führt zu Produkten mit besserer Löslichkeit in organischen Lösungsmitteln.

Aus der großen Zahl von Druckschriften, die Aramide der verschiedensten Strukturen betreffen, seien hier zitiert für Aramide, die ausschließlich aus para-Diamin- und Dicarbonsäurebausteinen aufgebaut sind, die DE-PS 22 19 703 und die US-PS 3 819 587, für Aramide, die aus gewinkelten aromatischen Bausteinen, z. B. Ether-Brücken enthaltenden Bausteinen, und/oder aromatischen meta-Diaminen und/oder meta-Dicarbonsäuren aufgebaut sind, die US-PS 3 505 288 und die DE-OS 1 595 681 und für Aramide, die weitgehend aus para-Diaminen und para-Dicarbonsäuren aufgebaut sind, aber in der Kette verschiedenartige Diamine enthalten, die DE-OS 35 10 655.

Die Umsetzung zwischen den aromatischen Diaminen und aromatischen Dicarbonsäuredichloriden erfolgt in organischen Lösungsmitteln, die ein möglichst gutes Lösungsvermögen für die gebildeten Aramide haben sollen. Solche Lösungsmittel finden sich in der Klasse der Amide niederer aliphatischer Carbonsäuren und der Phosphorsäure. Häufig eingesetzte Lösungsmittel dieser Art sind Dimethylformamid, Dimethylacetamid, Hexamethylphosphorsäuretriamid und insbesondere und besonders bevorzugt N-Methylpyrrolidon.

Wie sich aus den obengenannten Druckschriften ergibt, hat es sich häufig als zweckmäßig und erforderlich erwiesen, zur weiteren Verbesserung der Löslichkeit der Aramide in den organischen Lösungsmitteln bestimmte anorganische Salze zuzusetzen, die einen drastischen lösungsvermittelnden Effekt ausüben. Wirksame Salze dieser Art sind insbesondere die Erdalkali- und Lithiumhalogenide, vor allem Calcium- und Lithiumchlorid.

Bei der Herstellung der Aramide nach den bisher bekannten Verfahren ist es erforderlich, in einem weitgehend wasserfreien Medium zu arbeiten. So wird in der Deutschen Offenlegungsschrift 22 19 703 für die dort beschriebene Herstellung der Aramide ein Wassergehalt des Polymerisationsansatzes von unter 300 ppm gefordert. In den meisten Publikationen wird sogar ein Wassergehalt des Polymerisationsansatzes von unter 100 ppm gefordert. Verwiesen wird hierzu beispielsweise auf Journal of Applied Polymer Science, Band 26 (4), Seite 1.211 bis 1.220 und auf die Japanische Patentoffenlegung JP-51/127197 (Chemical Abstracts, 86:56.211n, wo die Polykondensation zwischen Diamin- und Dicarbonsäuredichlorid in einem Medium mit einem Wassergehalt von nur 38 ppm durchgeführt werden muß.

Werden die in der Literatur geforderten niedrigen Wasseranteile in dem Polykondensationsansätzen nicht eingehalten, so erhält man Aramide, die nach dem Verspinnen Filamente mit geringerer Hydrolysebeständigkeit und schlechteren mechanischen Eigenschaften, wie z. B. geringerer Festigkeit und geringerem Anfangsmodul liefern. Damit geht eine besondere vorteilhafte Eigenschaft verloren, und die so erhaltenen Fasermaterialien können für zahlreiche technische Einsatzgebiete nicht mehr benutzt werden. Nach dem Stand der Technik war es daher erforderlich, alle Ausgangsmaterialien, die zur Herstellung von Aramiden eingesetzt werden sollten, praktisch vollständig von Wasser zu befreien. Diese Notwendigkeit verursacht in der Technik nicht nur hohe Kosten, sondern sie führt auch zusätzlich zu Materialverlusten und zu Nachteilen bei der Ausführung der Polykondensation. Hohe Kosten entstehen durch die Notwendigkeit, die Lösungsmittel vor ihrem Einsatz zu destillieren und peinlich genau zu rektifizieren, um aus ihnen die in den handelsüblichen Qualitäten enthaltenen Wassermengen und die geringen darin vorhandenen Mengen an freien aliphatischen Aminen zu entfernen (handelsübliches N-Methylpyrrolidon beispielsweise enthält in der Regel etwa 500 ppm Wasser und bis zu 0,01 % Methylamin).

Auch die Trocknung der aromatischen Diamine erfordert einen hohen technischen Aufwand, da sie wegen der großen Empfindlichkeit insbesondere der para-Diamine, die sehr leicht zu chinoiden, stark gefärbten Produkten oxidierbar sind, unter sehr schonenden Bedingungen in einer trockenen Inertgasatmosphäre, vorzugsweise im Vakuum, ausgeführt werden muß.

Sowohl bei der Trocknung der Lösungsmittel als auch der Amine lassen sich bei aller Sorgfalt Verluste nicht vermeiden, die nicht nur zu einer Verteuerung der Verfahren, sondern auch zu ökologischen Problemen Anlaß geben können.

Ein weiterer gravierender Nachteil der bekannten Verfahren besteht darin, daß die weitestgehend getrockneten Diamine außerordentlich stark zum Stauben neigen. Aus toxikologischen Gründen müssen Stäube aber peinlich vermieden werden. Die Handhabung muß daher mit größter Vorsicht erfolgen.

Die vorliegende Erfindung betrifft nun ein Verfahren zur Herstellung von hydrolysebeständigen Aramiden, bei dem die Schwierigkeiten der bisher in der Technik benutzten Verfahren weitgehend überwunden werden. Die Herstellung der Aramide nach dem erfindungsgemäßen Verfahren erfolgt wie bei den bekannten Verfahren durch Umsetzung von aromatischen Dicarbonsäuredichloriden oder Dicarbonsäuredichlorid-Gemischen mit aromatischen Diaminen oder Diamingemischen in einem für die Herstellung von aromatischen Polyamiden üblichen organischen Lösungsmittel und gegebenenfalls in Gegenwart von einem bekannten, die Löslichkeit der gebildeten aromatischen Polyamide in dem organischen Lösungsmittel erhöhenden anorganischen Salz. Das erfindungsgemäße Verfahren unterscheidet sich jedoch gravierend von den bisher bekannten Verfahren dadurch, daß das Diamin oder das Diamingemisch mit einem Wassergehalt von bis zu 25 Gew.-% in dem organischen Lösungsmittel, welches seinerseits Wasser, vorzugsweise nicht über 1 %, enthalten kann, gelöst wird und diese Lösung einer Vakuumdestillation unter einer Inertgasatmosphäre bei einem Druck von 100 bis $5 \cdot 10^3$ Pa und einer Sumpftemperatur, die je nach dem vorhandenen Destillationsdruck bei ca. 20 bis 160°C, vorzugsweise bei 50 bis 120°C liegt, solange unterwirft, bis ein Wassergehalt des Sumpfes von unter 100 ppm, vorzugsweise unter 50 ppm erreicht ist. Anschließend werden dem erhaltenen Destillationssumpf in an sich bekannter Weise gegebenenfalls die anorganischen Salze und danach das Dicarbonsäuredichlorid bzw. die Dicarbonsäuredichloridmischung zugefügt und die Kondensationsreaktion wie üblich bei Temperaturen von 20 bis 100°C, vorzugsweise 30 bis 80°C ausgeführt.

Das erfindungsgemäße Verfahren kann mit Vorteil zur Herstellung aller bisher bekannter Typen von Aramiden eingesetzt werden. So können danach die extrem festen, aber auch extrem schwer löslichen Aramidtypen, die aus weitgehend einheitlichen, ausschließlichen para-bindigen Dicarbonsäuren und Diaminbausteinen aufgebaut sind, hergestellt werden. Es können aber auch Typen mit verbesserter Löslichkeit erhalten werden, indem man, wie eingangs beschrieben, Mischungen von Diaminen oder von Dicarbonsäuredichloriden einsetzt, die eine gewissen Flexibilität in die Polyamidkette hineinbringen oder die zumindest eine Störung der Sekundärstruktur des erhaltenen Aramids bewirken. Selbstverständlich können auch Verfahren zur Herstellung von Aramiden mit verbesserter Löslichkeit, bei denen ein Zusatz von meta-bindigen Kettenbausteinen erfolgt, z. B. ein Zusatz von Isophthalsäure oder aromatischen meta-Diaminen durch die Anwendung des erfindungsgemäßen Verfahrens ganz erheblich verbessert werden.

Das erfindungsgemäße Verfahren kann auch unter Einsatz von organischen Lösungsmitteln erfolgen, die einen höheren Wassergehalt, z. B. einen Wassergehalt von 2 bis 5 %, aufweisen, wenn die Destillationsdauer entsprechend verlängert wird. Der Einsatz der so stark wasserhaltigen Lösungsmittel ist aber in der Regel wegen der Verlängerung der Destillationsdauer ökonomisch nicht sinnvoll.

Die nach dem erfindungsgemäßen Verfahren einzusetzenden Diamine oder Diamingemische enthalten in der Regel bis zu 25 Gew.-% Wasser. Das erfindungsgemäße Verfahren kann selbstverständlich auch mit Diaminen oder Diamingemischen betrieben werden, die noch mehr Wasser enthalten, wenn die Destillation der Diamine in dem organischen Lösungsmittel entsprechend verlängert wird. Ein besonderer Vorteil des erfindungsgemäßen Verfahrens besteht nun aber darin, daß man Diamine einsetzt, die noch von der Herstellung feucht sind, also keine Verluste und die Gefahr von Oxidation mit sich bringenden Trocknungsoperation unterworfen werden müssen. Derartige herstellungsfeuchte Diamine weisen in der Regel keinen Wassergehalt über 25 Gew.-% auf. Aus diesem Grund ist es besonders zweckmäßig, derartige Diamine und Diamingemische mit einem Wassergehalt von bis zu 25 % für das erfindungsgemäße Verfahren einzusetzen. Die untere Grenze des Wassergehalts sollte nach Möglichkeit nicht unter 10 Gew.-% liegen, obwohl das erfindungsgemäße Verfahren selbstverständlich auch mit Diaminen und Diamingemischen betrieben werden kann, deren Wassergehalt niedriger liegt. Ein Wassergehalt von über 10 % hat jedoch den erheblichen Vorteil, daß diese Produkte nicht mehr zum Stauben neigen und daher mit erheblich größerer Sicherheit im Betrieb verarbeitet werden können. Völlig trockene Diamine werden zweckmäßigerweise vor ihrem Einsatz mit soviel Wasser befeuchtet, daß sie bei der Handhabung nicht mehr stauben.

Das erfindungsgemäße Verfahren wird in der Regel mit einem organischen Lösungsmittel mit einem Wassergehalt von bis zu ca. 500 ppm betrieben. Auch hier ist zu sagen, daß selbstverständlich auch organische Lösungsmittel mit einem höheren Wassergehalt eingesetzt werden können, wenn die anschließende Destillation der Diaminlösung entsprechend verlängert wird. Der Einsatz von organischen Lösungsmitteln mit einem Wassergehalt bis zu 500 ppm ist deshalb besonders zweckmäßig, weil derartige Lösungsmittel sowohl handelsüblich sind als auch durch einfache Recyclisierungsoperationen aus der Aramidproduktion zurückgewonnen werden.

Eine besonders vorteilhafte Ausführungsform des erfindungsgemäßen Verfahrens arbeitet daher auch mit organischen Lösungsmitteln, die aus dem gleichen Prozeß zurückgewonnen wurden.

Die erfindungsgemäß auszuführende Destillation der Diaminlösung erfolgt in einer Inertgasatmosphäre und zweckmäßigerweise unter Rühren. Der Druck, bei dem die Destillation ausgeführt wird, liegt normalerweise im Bereich von 100 bis $5 \cdot 10^3$ Pa wobei sich eine Destillationstemperatur von etwa 20 bis 160°C je nach dem gewählten Druck ergibt. Aus technischen Gründen ist es besonders vorteilhaft, bei einem Druck von $2 \cdot 10^3$ bis $4 \cdot 10^3$ Pa und einer Destillationstemperatur, die dem Druck entsprechend bei 50 bis 120°C liegt, zu destillieren.

Zweckmäßigerweise wird für die Destillation der Diaminlösung eine Destillationskolonne mit einer Regelungsmöglichkeit für das Rückflußverhältnis eingesetzt. Diese Anlage wird dann bei einem Rückflußverhältnis zwischen 2 : 3 bis 90 : 3, vorzugsweise 4 : 3 bis 70 : 3 betrieben. Bei diskontinuierlicher Arbeitsweise ist es vorteilhaft, mit geringerem Rückflußverhältnis das Wasser abzutrennen und anschließend bei höherem Rückflußverhältnis die Restwassermenge zusammen mit einem Teil des organischen Lösungsmittels abzudestillieren.

In einer weiteren bevorzugten diskontinuierlichen Ausführungsform des erfindungsgemäßen Verfahrens wird die Restmenge des Wassers durch einen intermittierenden Destillationsprozeß eliminiert. Hierbei wird die Destillation für einige Zeit ohne Abnahme von Destillat, d. h. mit 100 %igem Rückfluß gefahren, wobei sich in der Kolonne das Wasser anreichert. Dann wird für kurze Zeit ohne Rückfluß, d. h. mit 100 %iger Abnahme gefahren, bis die wasserreiche Phase aus der Kolonne entfernt ist. Dieser Wechsel kann mehrfach wiederholt werden, bis der gewünschte niedrige Wassergehalt im Sumpf erreicht ist.

Ein weiterer besonderer Vorteil des Einsatzes einer Destillationskolonne besteht darin, daß man bei entsprechender Konstruktion mit ihrer Hilfe das erfindungsgemäße Verfahren kontinuierlich ausführen kann. In diesem Fall wird die Diaminlösung kontinuierlich in einen Boden der Kolonne eingespeist, bei dem die Zusammensetzung der siedenden flüssigen Phase der Zusammensetzung der einzuspeisenden Diaminlösung entspricht.

Bei diskontinuierlicher Arbeitsweise beträgt die Destillationsdauer bis zum Erhalt einer Diaminlösung mit einem Wassergehalt von unter 50 ppm je nach den im Rahmen der obigen Angaben gewählten Destillationsbedingungen 1 bis 10 Stunden. Bei kontinuierlichem Betrieb wird diese Frage selbstverständlich gegenstandslos. Wie bereits oben ausgeführt, kann das erfindungsgemäße Verfahren auf alle üblichen Verfahren zur Herstellung von Aramiden und für die dafür in der Regel eingesetzten Lösungsmittel, wie beispielsweise Dimethylacetamid und N-Methylpyrrolidon, eingesetzt werden. Besonders gut für die Durchführung des erfindungsgemäßen Prozesses eignet sich als organisches Lösungsmittel N-Methylpyrrolidon.

Das erfindungsgemäße Verfahren führt zu Aramiden, die die gleiche hohe Hydrolysebeständigkeit haben wie Aramide, die nach herkömmlichen Verfahren unter Einsatz wasserfreier Ausgangsmaterialien erhalten werden können. Läßt man die erfindungsgemäß durchzuführende Destillation der Diaminlösung weg, so werden dagegen Aramide erhalten, die eine deutlich erniedrigte Hydrolyseresistenz aufweisen. Eine noch weitere Steigerung der Aramidqualität, insbesondere der Hydrolyseresistenz der nach dem erfindungsgemäßen Verfahren herstellbaren Produkte kann dadurch erreicht werden, daß der Diaminlösung nach Abschluß der Destillation eine geringe Menge Trimethylchlorsilan zugesetzt wird. Die Menge dieses Mittels wird zweckmäßigerweise so gewählt, daß sie der in der Diaminlösung vorhandenen Restwassermenge äquivalent ist. Es gelingt auf diese Weise, das Restwasser aus der destillierten Diaminlösung praktisch quantitativ zu entfernen.

Im Anschluß an die erfindungsgemäß durchgeführte Entfernung des Wassers aus der Diaminlösung wird diese in an sich bekannter Weise mit Dicarbonsäuredichloriden zur Reaktion gebracht. Für den Fall, daß aufgrund der gewählten Aramidstruktur eine Verbesserung der Löslichkeit des Polymers in dem organischen Lösungsmittel gewünscht wird, werden der Diaminlösung zunächst die zur Lösungsverbesserung erforderlichen anorganischen Salze, wie z. B. Lithiumchlorid oder Calciumchlorid in den bekannten Mengenanteilen zugesetzt und anschließend das Dicarbonsäuredichlorid. Die anschließende Polykondensation von Diaminen und Dicarbonsäuredichloriden erfolgt in üblicher Weise bei Temperaturen von 20 bis 100°C, vorzugsweise 30 bis 50°C.

Nach dem erfindungsgemäßen Verfahren können beispielsweise die aus der Deutschen Patentschrift 22 19 703, aus den US-Patentschriften 3 819 587 und 3 505 288 und den Deutschen Offenlegungsschriften 15 95 581 und 35 10 655 bekannten aromatischen Polyamide in der oben beschriebenen, besonders vorteilhaften Weise hergestellt werden.

Es ist überraschend, daß es nach dem erfindungsgemäßen Verfahren möglich ist, ausgehend von feuchten Ausgangsmaterialien zu Aramiden von ausgezeichneter Qualität bezüglich Festigkeit und Farbe zu gelangen, wenn der Fachmann weiß, daß aromatische Diamine, insbesondere solche, bei denen die Aminogruppen in para-Stellung zueinander stehen, empfindliche Verbindungen sind, die vor Belastungen durch erhöhte Temperatur und oxidierende oder sonstwie aggressive Medien geschützt werden müssen, und daß auch die der Gruppe der Säureamide zuzurechnenden organischen Lösungsmittel in Gegenwart von Wasser zur Abspaltung von Aminen neigen. Der Fachmann mußte daher erwarten, daß das Abdestillieren von Wasser bis zur weitgehenden Entwässerung aus einer Lösung der genannten Amine in den organischen Lösungsmitteln zu einer starken Schädigung der Amine zu Substanzverlust und zu erheblichen Verfärbungen Anlaß geben müßte. Dies ist offensichtlich auch der Grund, warum der erfindungsgemäße Weg trotz intensiver Arbeiten auf diesem Gebiet von niemandem vorher beschritten worden ist.

**Beispiel**

**A. Herstellung des Polymers:**

Aromatisches Copolyamid aus 100 Mol-% Terephthaloylchlorid, 50 Mol-% 3,3'-Dimethylbenzidin, 25 Mol-% 1,4-Bis-(4' aminophenoxy)-benzol und 25 Mol-% p-Phenylendiamin.

48,8 g (0,2 Mol) feuchtes 3,3'-Dimethylbenzidin mit einem Wassergehalt von 15 Gew.-%, 35,0 g (0,1 Mol) feuchtes 1,4-Bis-(4'aminophenoxy)-benzol mit einem Wassergehalt von 15 Gew.-% und 12,4 g (0,1 Mol) feuchtes p-Phenylendiamin mit einem Wassergehalt von 15 Gew.-% werden in einem 3 1-Kolben mit Rührer, Destillationskolonne und Zuleitung für Reinstickstoff in 2.000 g zurückgewonnenem N-Methylpyrrolidon mit einem Wassergehalt von 480 ppm unter Rühren und unter Einleiten von Stickstoff bei Zimmertemperatur gelöst.

Die Apparatur wird dann auf einen Druck von $25 \cdot 10^2$ Pa evakuiert und unter Rühren mit einem Heizbad auf eine Kolben-Innentemperatur von 86 - 89°C (Außentemperatur 120°C) erwärmt. Man destilliert so 90 Minuten bei einem Rückflußverhältnis von 5 : 3, drei Stunden bei einem Rückflußverhältnis von 60 : 3 und nochmals 30 Minuten bei einem Rückflußverhältnis von 5 : 3.

Danach wird die Apparatur auf 10°C abgekühlt und mit Stickstoff "belüftet". Anschließend wird bei einer Temperatur zwischen 12°C und 67°C innerhalb von 65 Minuten 82,4 g (0,406 Mol) Terephthaloylchlorid zugegeben. Die viskose Lösung wird 40 Minuten lang bei 68°C nachgerührt und mit 24,5 g Calciumoxid (96 %ig) neutralisiert und weitere 30 Minuten bei 70°C nachgerührt.

Die Lösung enthielt 6,5 % Copolyamid und 2,2 % Calciumchlorid. Das gelöste Copolyamid hatte eine inhärente Viskosität von 3,41. Unter inhärenter Viskosität wird der Ausdruck

$$\eta_{inh} = \frac{1n\eta_{rel}}{c}$$

verstanden. $\eta_{rel}$ bedeutet dabei die relative Viskosität, c die angewandte Konzentration in g/100 ml.

Sie wurde für die Zwecke der vorliegenden Erfindung bestimmt an Lösungen von jeweils 0,5 g Polymer in 100 ml 98 Gew.-%iger Schwefelsäure bei 25°C.

**B. Probespinnen des hergestellten Polymers:**

Die Lösung wurde filtriert, entgast und naß versponnen. Dazu wurde sie aus einer Düse mit 50 Öffnungen von jeweils 0,1 mm Durchmesser in ein waagrecht angeordnetes Koagulationsbad, bestehend aus einer 60°C warmen Lösung von 35 % N-Methylpyrrolidon in Wasser, mit einer Geschwindigkeit von 8,2 m/min ausgesponnen. Die erhaltenen Fäden wurden durch zwei Wasserbäder, eine Waschmaschine, über eine Trockengalette und schließlich über ein Bügeleisen mit einer Temperatur von 376°C mit einer Geschwindigkeit von 79,5 m/min abgezogen.

Der Einzelfilamenttiter beträgt 1,58 dtex bei einer Feinheits-Festigkeit von 158 cN/tex, einer Dehnung von 2,9 % und einem Anfangsmodul von 61 N/tex, bezogen auf 100 % Dehnung. Der Anfangsmodul wird dabei aus dem Kraft-Dehnungsdiagramm gewonnen und auf eine Dehnung von 100 % normiert.

Nach 100 Stunden bei 150°C in einer Wasserdampfatmosphäre haben die Filamente eine Reißfestigkeit von 85 % der Anfangsfestigkeit.

**Vergleichsbeispiel**

Aromatisches Copolyamid aus 100 Mol-% Terephthaloylchlorid, 50 Mol-% 3,3'-Dimethylbenzidin, 25 Mol-% 1,4-Bis-(4' aminophenoxy)-benzol und 25 Mol-% Phenylendiamin.

42,4 g (0,2 Mol) trockenes 3,3'-Dimethylbenzidin, 29,2 g trockenes (0,1 Mol) 1,4-Bis-(4'aminophenoxy)-benzol, 10,8 g (0,1 Mol) trockenes p-Phenylendiamin, 4,2 g Calciumchlorid und 4,2 g Lithiumchlorid werden unter Stickstoff in 1.754 g zurückgewonnenem N-Methylpyrrolidon mit einem Wassergehalt von ca. 417 ppm gelöst und zwischen 11°C und 65°C innerhalb von 65 Minuten 82,4 g (0,406 Mol) Terephthaloylchlorid zugegeben. Die viskose Lösung wurde 40 Minuten lang bei 68°C nachgerührt und mit 24,5 g Calciumoxid (96 %ig) neutralisiert und weitere 30 Minuten bei 70°C nachgerührt.

Die Lösung enthält 6,5 % Copolyamid und 2,2 % Calciumchlorid. Das gelöste Copolyamid hat eine inhärente Viskosität von 3,40.

Das erhaltene Polymer wurde probegesponnen, wie im vorangehenden Beispiel beschrieben.

Der Einzelfilamenttiter beträgt 1,56 dtex bei einer Feinheits-Festigkeit von 120 cN/tex, einer Dehnung von 2,5 % und einem Anfangsmodul von 55 N/tex, bezogen auf 100 % Dehnung.

Nach 100 Stunden bei 150°C in einer Wasserdampfatmosphäre haben die Filamente eine Reißfestigkeit von 69 % der Anfangsfestigkeit.

**Patentansprüche**

1. Verfahren zur Herstellung von aromatischen Polyamiden mit hoher Hydrolysebeständigkeit durch Umsetzung von aromatischen Dicarbonsäuredichloriden oder Dicarbonsäuredichloridgemischen mit aromatischen Diaminen oder Diamingemischen in einem für die Herstellung von aromatischen Polyamiden üblichen organischen Lösungsmittel und gegebenenfalls in Gegenwart von bekannten, die Löslichkeit der gebildeten aromatischen Polyamide in dem organischen Lösungsmittel erhöhenden anorganischen Salzen, dadurch gekennzeichnet, daß das Diamin oder Diamingemisch mit einem Wassergehalt von bis zu 25 Gew.-% in dem organischen Lösungsmittel, das ebenfalls Wasser enthalten kann, gelöst wird und die Lösung einer Vakuumdestillation unter einer Inertgasatmosphäre bei einem Druck von 100 bis $5 \cdot 10^3$ Pa und einer Sumpftemperatur je nach dem vorhandenen Destillationsdruck bei ca. 20 bis 160°C liegt, unterworfen wird, bis ein Wassergehalt des Sumpfes von < 100 ppm erreicht ist und daß anschließend in an sich bekannter Weise gegebenenfalls die anorganischen Salze und danach das Dicarbonsäuredichlorid oder Dicarbonsäuredichloridgemisch zugefügt werden und die Kondensationsreaktion wie üblich ausgeführt und zum Abschluß gebracht wird.

2. Verfahren gemäß Anspruch 1, dadurch gekennzeichnet, daß ein Diamin oder Diamingemisch mit einem Wassergehalt von 10 bis 25 Gew.-% eingesetzt wird.

3. Verfahren gemäß mindestens einem der Ansprüche 1 und 2, dadurch gekennzeichnet, daß ein rohes, nicht speziell rektifiziertes, zurückgewonnenes organisches Lösungsmittel eingesetzt wird.

4. Verfahren gemäß mindestens einem der Ansprüche 1 bis 3, dadurch gekennzeichnet, daß bei einem Druck von $2 \cdot 10^3$ bis $4 \cdot 10^3$ Pa destilliert wird.

5. Verfahren gemäß mindestens einem der Ansprüche 1 bis 4, dadurch gekennzeichnet, daß bei einer Temperatur von 50 bis 120°C destilliert wird.

6. Verfahren gemäß mindestens einem der Ansprüche 1 bis 5, dadurch gekennzeichnet, daß die Destillation bei einem Rückflußverhältnis von 2 : 3 bis 90 : 3, vorzugsweise 4 : 3 bis 70 : 3 ausgeführt wird.

7. Verfahren gemäß mindestens einem der Ansprüche 1 bis 5, dadurch gekennzeichnet, daß als organisches Lösungsmittel Dimethylacetamid, N-Methylpyrrolidon oder Hexamethylphosphorsäuretriamid eingesetzt wird.

8. Verfahren gemäß mindestens einem der Ansprüche 1 bis 7, dadurch gekennzeichnet, daß die Destillation kontinuierlich durchgeführt wird.

9. Verfahren gemäß mindestens einem der Ansprüche 1 bis 8, dadurch gekennzeichnet, daß der Diaminlösung nach der Destillation eine der Restwassermenge äquivalente Menge von Trimethylchlorsilan zugefügt wird.

**Claims**

1. A process for preparing an aromatic polyamide of high hydrolysis resistance by reacting an aromatic dicarbonyl dichloride or dicarbonyl dichloride mixture with an aromatic diamine or diamine mixture in an organic solvent customary for preparing aromatic polyamides and in the presence or absence of a known inorganic salt which increases the solubility of the aromatic polyamide formed in the organic solvent, which comprises dissolving the diamine or diamine mixture, having a water content of up to 25% by weight, in the organic solvent, which might likewise contain water, and subjecting the solution to a vacuum distillation in an inert gas atmosphere at a pressure of from 100 to $5 \times 10^3$ Pa at a bottom of column temperature of about 20 to 160°C, depending on the distillation pressure used, until the water content of the bottom product is <100 ppm and then adding in a conventional manner the inorganic salt, if necessary, and thereafter the dicarbonyl dichloride or dicarbonyl dichloride mixture and performing and completing the condensation reaction in a conventional manner.

2. The process of claim 1, wherein the diamine or diamine mixture used has a water content of from 10 to 25% by weight.

3. The process of at least one of claims 1 and 2, wherein a crude recovered organic solvent which has not been specially rectified is used.

4. The process of at least one of claims 1 to 3, wherein the distillation is carried out at a pressure of from $2 \times 10^3$ to $4 \times 10^3$ Pa.

5. The process of at least one of claims 1 to 4, wherein the distillation is carried out at a temperature of from 50 to 120°C.

6. The process of at least one of claims 1 to 5, wherein the distillation is carried out under a reflux ratio of from 2:3 to 90:3, preferably from 4:3 to 70:3.

7. The process of at least one of claims 1 to 5, wherein the organic solvent used is dimethylacetamide, N-methylpyrrolidone or hexamethylphosphoramide.

8. The process of at least one of claims 1 to 7, wherein the distillation is carried out continuously.

9. The process of at least one of claims 1 to 8, wherein, following the distillation, the diamine solution is admixed with an amount of trimethylchlorosilane equivalent to the residual water level.

## Revendications

1. Procédé pour la préparation de polyamides aromatiques ayant une stabilité à l'hydrolyse élevée par réaction de dichlorures d'acides dicarboxyliques ou de mélanges de dichlorures d'acides dicarboxyliques aromatiques avec des diamines ou des mélanges de diamines aromatiques dans un solvant organique usuel pour la préparation de polyamides aromatiques et éventuellement en présence de sels minéraux connus augmentant la solubilité dans le solvant organique des polyamides aromatiques formés, caractérisé en ce qu'on dissout la diamine ou le mélange de diamines ayant une teneur en eau allant jusqu'à 25 % en poids dans le solvant organique, qui peut également contenir de l'eau, et on soumet la solution à une distillation sous vide sous une atmosphère inerte, sous une pression de 100 à $5 \cdot 10^3$ Pa et à une température du bas de colonne en fonction de la pression de distillation présente d'environ 20 à 160 °C, jusqu'à ce que l'on obtienne une teneur en eau du résidu inférieure à 100 ppm et en ce qu'on ajoute ensuite, de façon connue en soi, éventuellement des sels minéraux et ensuite le dichlorure d'acide dicarboxylique ou le mélange de dichlorures d'acides dicarboxyliques et on met en oeuvre la réaction de condensation de façon usuelle et on termine la réaction.

2. Procédé selon la revendication 1, caractérisé en ce qu'on utilise une diamine ou un mélange de diamines ayant une teneur en eau de 10 à 25 % en poids.

3. Procédé selon au moins l'une des revendications 1 et 2, caractérisé en ce qu'on utilise un solvant organique brut récupérée n'ayant pas été spécialement rectifié.

4. Procédé selon au moins l'une des revendications 1 à 3, caractérisé en ce qu'on effectue la distillation sous une pression de $2 \cdot 10^3$ à $4 \cdot 10^3$ Pa.

5. Procédé selon au moins l'une des revendications 1 à 4, caractérisé en ce qu'on distille à une température de 50 à 120 °C.

6. Procédé selon au moins l'une des revendications 1 à 5, caractérisé en ce qu'on effectue la distillation à un rapport de reflux de 2:3 à 90:3, de préférence de 4:3 à 70:3.

7. Procédé selon au moins l'une des revendications 1 à 5, caractérisé en ce qu'on utilise en tant que solvant organique le diméthylacétamide, la N-méthylpyrrolidone ou le triamide de l'acide hexaméthyl-phosphorique.

8. Procédé selon au moins l'une des revendications 1 à 7, caractérisé en ce qu'on effectue la distillation en continu.

9. Procédé selon au moins l'une des revendications 1 à 8, caractérisé en ce qu'on ajoute à la solution de diamines une quantité de triméthylchlorosilane équivalente à la quantité d'eau résiduelle.